Europäisches Patentamt

European Patent Office

Office européen des brevets

(11) Veröffentlichungsnummer: **0 304 508**
**A1**

## (12) EUROPÄISCHE PATENTANMELDUNG

(21) Anmeldenummer: 87112518.3

(22) Anmeldetag: 28.08.87

(51) Int. Cl.⁴: **F24H 6/00**

(43) Veröffentlichungstag der Anmeldung:
**01.03.89 Patentblatt 89/09**

(84) Benannte Vertragsstaaten:
**AT BE CH DE ES FR IT LI NL SE**

(71) Anmelder: **Viessmann, Hans, Dr.**
**Im Hain 24**
**D-3559 Battenberg/Eder(DE)**

(72) Erfinder: **Viessmann, Hans, Dr.**
**Im Hain 24**
**D-3559 Battenberg/Eder(DE)**

(74) Vertreter: **Wolf, Günter, Dipl.Ing.**
**Patentanwälte Dipl.-Ing. Amthor Dipl.-Ing.**
**Wolf Postfach 70 02 45 An der Mainbrücke 16**
**D-6450 Hanau 7(DE)**

(54) Öl- oder gasbefeuerter Kondensationsheizkessel.

(57) Der öl- oder gasbefeuerte Kondensatheizkessel besteht aus einer mit Öl- oder Gasgebläsebrenner (6) bestückten Brennkammer (15), von der Heizgaszüge (16) zu einer Sammelkammer (2) mit Gasabzug (11) führen. In der Heizgasführung zwischen Brenn- und Sammelkammer (15, 2) ist ein Gas/Luftwärmetauscher (1) für die Voll- oder Teilkondensation der Heizgase angeordnet. Um bei Abgaszuführung aus der Kondensatsammelkammer zum Brenner zwecks $NO_x$-Reduzierung aggressive Kondensatniederschläge aus dem noch teilfeuchten Abgas zu verhindern, und um den Brenner bzw. den Brennerbereich nicht kondensatfest ausbilden zu müssen, ist der Heizkessel derart ausgebildet, daß luftabzugsseitig hinter dem Wärmetauscher (1) und abzugsseitig hinter der Sammelkammer (2) zum Brenner (6) führende Abgas/Luftleitungen (3, 4) angeordnet sind. Diese Leitungen 3, 4 sind in eine gemeinsame, zum Luftansauggehäuse (5) des Brenners (6) führende Gas/Luftmischleitung (7) einmündend angeordnet.

Fig.1

EP 0 304 508 A1

## Öl- oder gasbefeuerter Kondensatheizkessel

Die Erfindung betrifft einen öl- oder gasbefeuerten Kondensatheizkessel gemäß Oberbegriff des Patentanspruches 1.

Derartige Kondensatheizkessel sind bspw. nach dem DE-GM 86 07 953 bereits bekannt. Derartige Kondensatheizkessel, die auch als Brennwertkessel bezeichnet werden, unterscheiden sich von "normalen"Heizkesseln bezüglich ihrer Betriebsweise dadurch, daß die Heizgase gezielt bis zur Kondensation heruntergekühlt werden, was voraussetzt, daß der (Heizungs-) Rücklauf für derartige Heizkessel entsprechend niedrige Temperaturen haben muß, um die Heizgase im unteren Bereich des Heizkessel entsprechend abkühlen zu können. Neben der damit möglichen, optimalen Ausnutzung der umsetzbaren Wärme rücken in Rücksicht auf die Umweltbelastungen Maßnahmen zur sog. NO$_x$-Reduzierung in zunehmendem Maße in den Vordergrund, wobei es in diesem Zusammenhang ebenfalls schon bekannt ist, einen Teil der Abgase aus dem Kondensatsammelraum dem Brenner zuzuführen. Da diese Abgase nicht voll feuchtigkeitsfrei sind, kann eine solche Abgaszuführung zum Brenner zu Korrosionsproblemen am Brenner bzw. im Brennerbereich führen, da dort bei Vermischen mit der angesaugten Verbrennungsluft die dort enthaltene Feuchtigkeit kondensiert und daraus resultierend aggressives Kondensat im Brennerbereich anfällt. Den Brenner bzw. den Brennerbereich aus diesem Grunde kondensatfest gestalten zu wollen, wäre mit einem beträchtlichen Aufwand verbunden.

Ausgehend von einem Kondensatheizkessel der eingangs genannten Art, der den Vorteil bietet, durch den mit einbezogenen Abgas/ Luft wärmetauscher zusätzlich neben dem erwärmten Wärmeträgermedium erwärmte Frischluft liefern zu können, was zudem hinsichtlich der erreichbaren Kondensation insbesondere auch in kälteren Jahreszeiten (höhere Rücklauftemperaturen des Wärmeträgermediums) von Vorteil ist, liegt der Erfindung die Aufgabe zugrunde, einen Kondensatheizkessel der eingangs genannten Art dahingehend zu verbessern, bei Abgasteilrückführung zum Brenner mit einfachen Mitteln dafür zu sorgen, daß ein Kondensatausfall im Brenner bzw. im Brennerbereich verhindert werden kann.

Diese Aufgabe ist mit einem Kondensatheizkessel der eingangs genannten Art durch die im Kennzeichen des Hauptanspruches angeführten Merkmale gelöst. Vorteilhafte Weiterbildungen und praktische Ausführungsformen ergeben sich nach den Unteransprüchen.

Bei dieser Lösung werden also nicht nur einfach die noch feuchten und weitgehend abgekühlten Abgase in Teilabzweigung dem Brenner zugeführt, sondern es wird noch ein Teil der aus dem Wärmetauscher erwärmten Frischluft ebenfalls dem Brenner zugeführt, der aufgrund seines höheren Wärmepotentials nach Vermischung mit dem feuchten Abgas in der Lage ist, Feuchtigkeit aufzunehmen, so daß diese nicht mehr im Brenner bzw. Brennerbereich auskondensiert. Die von der Einmündungsstelle bzw. Zusammenführungsstelle der beiden Strömungskomponenten zum Ansauggehäuse des Brenners führende Leitung dient dabei als Mischstrecke für die erwärmte Frischluft einerseits und andererseits für das dieser Mischstrecke zugeführte noch teilfeuchte Abgas aus der Kondensatsammelkammer. Zweckmäßig ist dabei die Einmündungsstelle in Form eines Injektors ausgebildet oder mit Einleitungsleitelementen versehen. Um die Wegstrecke des Abgases zur Einmündungsstelle so kurz wie möglich zu halten, und letztlich auch,um den Leitungsaufwand zu reduzieren, sind vorteilhaft der Abgasabzug der Sammelkammer und die Frischluftabzweigleitung nach der gleichen Seite orientiert am Heizkessel angeordnet. In Weiterbildung dazu werden vorteilhaft der Abgasabzug der Sammelkammer und der Frischluftabzug des Wärmetauschers nach der gleichen Seite orientiert am Heizkessel angeordnet, an der der Brenner mit seinem Luftansauggehäuse angeordnet ist, wodurch kürzeste Leitungsstrecken gewährleistet sind.

Vor der Einmündungsstelle können die Leitungen für die erwärmte Frischluft und auch für das Abgas mit einem Querschnittsregelelement versehen sein, um diesbezüglich regelnd in die der Einmündungsstelle zuströmenden Komponenten eingreifen zu können, die vom Brennergebläse gemeinsam angesaugt werden.

Bezüglich der Abzweigung der Teilströme aus den Abzügen des Wärmetauscher bzw. der Kondensatsammelkammer werden die Lei tungen mit einem gegen die Ausströmrichtung angesetzten Hosenrohrteil an den Abzügen angeschlossen. Auch an diesen Abzweigbereichen können im Inneren der Abzugsrohre geeignete Leitbleche vorgesehen werden, die gegen die Strömungsrichtung weisen, um damit die abzutrennenden Teilströme gewissermaßen aus dem abströmenden Frischluft- bzw. dem Abgasstrom herausschälen zu können.

Der erfindungsgemäße Kondensatheizkessel wird nachfolgend anhand der zeichnerischen Darstellung von Ausführungsbeispielen näher erläutert.

Es zeigt schematisch

Fig. 1 einen Kondensatheizkessel in Seitenansicht mit prinzipieller Darstellung der Strömungsführung;

Fig. 2 den gleichen Kondensatheizkessel in bevorzugter praktischer Ausführungsform;

Fig. 3 eine Draufsicht auf das Unterteil des Heizkessels längs der Ebene III-III in Fig. 2;

Fig. 4, 5 in Seiten- und Draufsicht den Anschlußbereich der Leitungen an den zugehörigen Abzügen und

Fig. 6 im Schnitt eine weitere Ausführungsform der Einmündungsstelle.

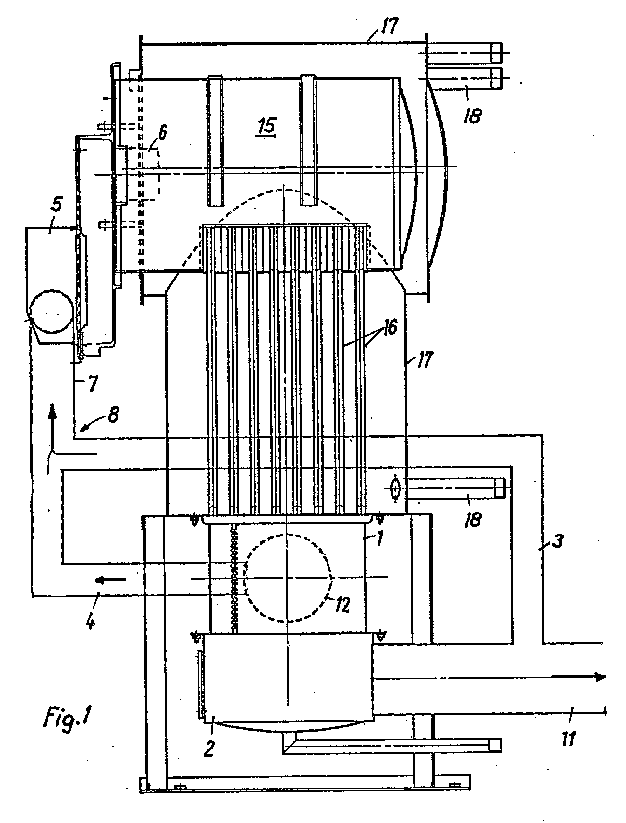

Gemäß Fig. 1, die lediglich das Prinzip der Strömungsführung der abgezweigten Teilströme zum Brenner verdeutlichen soll, besteht der Kondensatheizkessel aus einer mit Öl- oder Gasgebläsebrenner 6 bestückten Brennkammer 15, von der aus in bekannter Weise Heizgaszüge 16 zu einer Kondensatsammelkammer 2 mit Gasabzug 11 führen. In der Heizgasführung zwischen Brennkammer 15 und Sammelkammer 2 ist am Ende der Heizgaszüge 16 ein Gas/Luftwärmetauscher 1 angeordnet. Sowohl die Brennkammer 15 als auch die Heizgaszüge sind dabei in einem umschließenden, wasserführenden (Wärmeträgermedium) Gehäuse 17 untergebracht, das entsprechende Vor- und Rücklaufanschlüsse 18 für das Wärmeträgermedium aufweist. Luftabzugsseitig hinter dem Wärmetauscher 1 und abzugsseitig hinter der Sammelkammer 2 sind die Abzüge 11, 12 zum Brenner 6 bzw. zum Ansauggehäuse 5 des Brenners führende Abgas/Luftleitungen 3, 4 angeschlossen, die im Bereich einer Einmündungsstelle 8 zusammengeführt sind und in eine Gas/Luftmischleitung 7 einmünden, die zum Ansauggehäuse 5 des Brenners 6 führt.

In dieser Gas/Luftmischleitung 7, der also einerseits aus dem Wärmetauscher 1 abgezweigte und erwärmte Frischluft und andererseits aus der Kondensatsammelkammer 2 weitgehend abgekühlte und noch Feuchtigkeit enthaltende Abgase zugeführt werden, können sich diese Komponenten vermischen, so daß also dem Brenner 6 ein Luftgasgemisch zugeführt wird, aus dem im Brenner aufgrund der angehobenen Temperatur kein Kondensat mehr anfällt.

Der mit dem Kessel kombinierte Wärmetauscher erhält hierbei also noch eine weitere Funktion, nämlich die der Erzeugung einer dem Abgas zuzuführenden und erwärmten Frischluftkomponente.

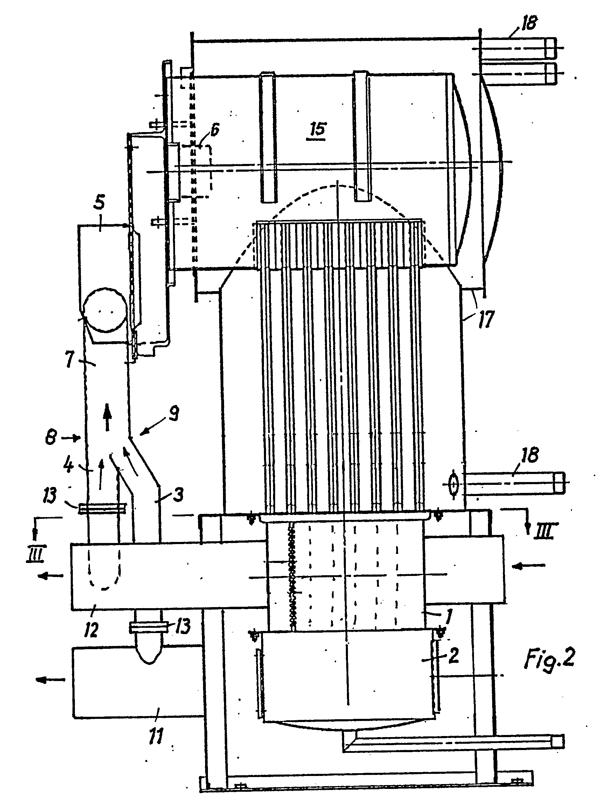

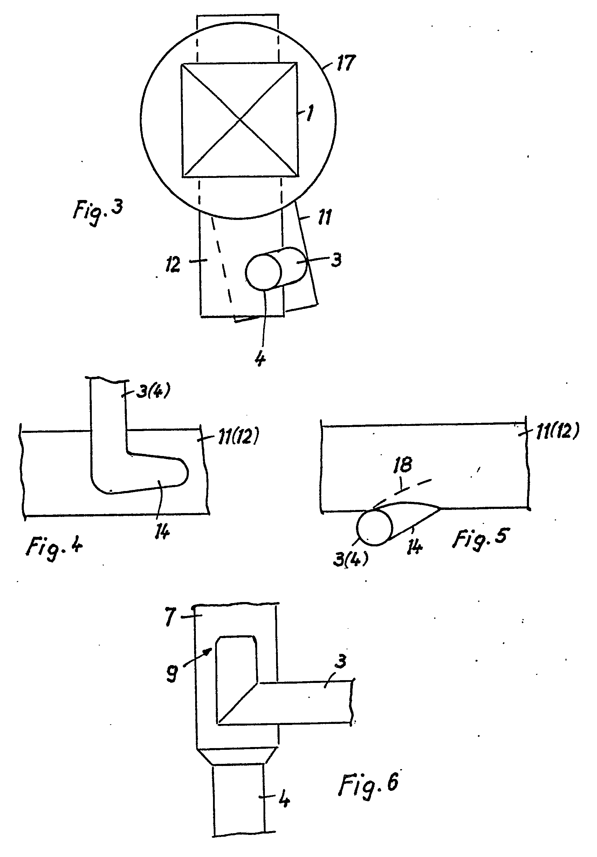

Um die erforderlichen Strömungswege und damit auch den damit verbundenen Leitungsaufwand so gering wie möglich werden zu lassen, sind gemäß Fig. 2 der Gasabzug 11 der Sammelkammer 2 und der Frischluftabzug 12 des Wärmetauschers nach der gleichen Seite orientiert am Heizkessel angeordnet, an der der Brenner 6 mit seinem Luftansauggehäuse 5 sitzt. Wie aus Fig. 2 ohne weiteres erkennbar, ergeben sich dadurch kurze Leitungsführungen und zwar insbesondere bei einer Anordnung der Abzüge 11, 12, wie aus Fig. 3 ersichtlich. Die Leitungen 3, 4 sind hierbei seitlich an den Abzügen 11, 12 angeordnet, die etwas zueinander versetzt vom Wärmetauscher 1 bzw. von der Sammelkammer 2 abgehen, so daß die aufsteigenden Leitungen 3, 4 unmittelbar benachbart nach oben zur Einmündungsstelle 8 des Gas/Luftmischrohres geführt werden können. Um das Abtrennen der Teilströme zu verbessern, können die Leitungen 3, 4, wie in den Fig. 4, 5 angedeutet, jeweils mit einem gegen die Ausströmrichtung angesetzten Hosenrohrteil 14 und den Abzügen 11, 12 angeschlossen sein, wobei ggf. im Bereich derartig gestalteter Abströmöffnungen Leitelemente 18 im Inneren der Abzüge 11, 12 vorgesehen werden können, die die Teilströme gewissermaßen aus dem jeweiligen Gesamtabzugsstrom ausschälen. Solche Leitelemente 18 könnten selbstverständlich auch dann vorgesehen werden, wenn die Leitungen 3, 4 jeweils senkrecht und mittig an den Rohren der Abzüge 11, 12 angeschlossen sein sollten. Ebenfalls unter Bezugnahme auf Fig. 2 ist die Einmündungsstelle 8 in Form eines Injektors 9 ausgebildet oder mit Einleitungsleitelementen 10 versehen. Andere diesbezügliche Ausführungsformen sind ebenfalls ohne weiteres möglich, wie bspw. in Fig. 6 angedeutet, die auch gleichzeitig für eine gute Vermischung der beiden zusammengeführten Teilströme sorgt.

Wie vorerwähnt, können in den Leitungen 3, 4 einfache Querschnittsregelelemente 13 vorgesehen werden, um regelnd in die Teilströme eingreifen zu können. Diese Regelelemente 13 bedürfen keiner näheren Erläuterung, da dafür die verschiedensten Ausführungsformen ohne weiteres zur Verfügung stehen bspw. in Form von glatten oder verstellbaren Blenden.

Die Maßgabe, daß die Distanz der Einmündungsstelle 8 zum Luftansauggehäuse 5 größer gehalten sein soll als die zum Frischluftabzug 12 des Wärmetauschers 1 ist insofern bedeutsam und wesentlich, als damit für eine möglichst lange Strecke der Gas/Luftmischleitung 7 und eine gute Vermischung der Abgase mit der abgezweigten Luft gesorgt ist.

## Ansprüche

1. Öl- oder gasbefeuerter Kondensatheizkessel, bestehend aus einer mit Öl- oder Gasgebläsebrenner bestückten Brennkammer, von der Heizgaszüge zu einer Sammelkammer mit Gasabzug führen, wobei in der Heizgasführung zwischen Brenn-und Sammelkammer ein Gas/Luftwärmetauscher für die Voll-oder Teilkondensation der Heizgase angeordnet ist,
**dadurch gekennzeichnet,**

daß luftabzugsseitig hinter dem Wärmetauscher (1) und gasabzugsseitig hinter der Sammelkammer (2) zum Brenner (6) führende Abgas/Luftabzweigleitungen (3, 4) und diese in eine gemeinsame, zum Luftansauggehäuse (5) des Brenners (6) führende Gas/Luftmischleitung (7) einmündend angeordnet sind.

2. Heizkessel nach Anspruch 1,
**dadurch gekennzeichnet,**
daß die Einmündungsstelle (8) in Form eines Injektors (9) ausgebildet oder mit Einleitungsleitelementen (10) versehen ist.

3. Heizkessel nach Anspruch 1 oder 2,
**dadurch gekennzeichnet,**
daß der Abgasabzug (11) der Sammelkammer (2) und die Frischluftabzweigleitung (4) nach der gleichen Seite orientiert am Heizkessel angeordnet sind.

4. Heizkessel nach Anspruch 3,
**dadurch gekennzeichnet,**
daß der Abgasabzug (11) der Sammelkammer (2) und der Frischluftabzug (12) des Wärmetauschers (1) nach der gleichen Seite orientiert am Heizkessel angeordnet sind, an der der Brenner (6) mit seinem Luftansauggehäuse (5) angeordnet ist.

5. Heizkessel nach einem der Ansprüche 1 bis 4,
**dadurch gekennzeichnet,**
daß die Leitung (3) und/oder die Leitung (4) mit einem Querschnittsregelelement (13) versehen ist.

6. Heizkessel nach einem der Ansprüche 1 bis 5,
**dadurch gekennzeichnet,**
daß die Leitungen (3, 4) mit einem gegen die Ausströmrichtung angesetzten Hosenrohrteil (14) an den Abzügen (11, 12) angeschlossen sind.

7. Heizkessel nach einem der Ansprüche 1 bis 6,
**dadurch gekennzeichnet,**
daß die Distanz der Einmündungsstelle(8) zum Luftansauggehäuse(5) größer gehalten ist als die zum Frischluftabzug (12) des Wärmetauschers(1).

*Fig.1*

Fig.2

Fig. 3

17

1

11

12

3

4

3(4)

11(12)

14

Fig. 4

11(12)

18

3(4)

14

Fig. 5

7

9

3

4

Fig. 6

Europäisches
Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-3 317 424 (M.A.N.)<br>* Zusammenfassung *<br>--- | 1 | F 24 H 6/00 |
| A | EP-A-0 226 534 (BATTELLE MEMORIAL INSTITUTE)<br>* Zusammenfassung *<br>--- | 1 | |
| A | DE-A-2 660 865 (ISHIKAWAJIMA-HARIMA JUKOGYO)<br>* Insgesamt *<br>--- | 1,3,4 | |
| A<br>. | CH-A- 234 646 (SULZER)<br>* Insgesamt *<br>----- | 1,3-5 | |

RECHERCHIERTE
SACHGEBIETE (Int. Cl.4)

F 24 H

Der vorliegende Recherchenbericht wurde für alle Patentansprüche erstellt

| Recherchenort | Abschlußdatum der Recherche | Prüfer |
|---|---|---|
| DEN HAAG | 26-04-1988 | VAN GESTEL H.M. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
............................................................
& : Mitglied der gleichen Patentfamilie, übereinstimmendes
    Dokument

EPO FORM 1503 03.82 (P0403)